# EUROPEAN PATENT APPLICATION

(11) **EP 2 988 467 A1**
(43) Date of publication of application: **24.02.2016**
(21) Application number: 15176771.2
(22) Date of filing: 15.07.2015
(51) Int. Cl.: H04L 29/06, H04W 12/08, H04W 88/08

(54) **WIRELESS OUT-OF-BAND AUTHENTICATION FOR A CONTROLLER AREA NETWORK**

(30) Priority: 20.08.2014 US 201462039580 P; 30.12.2014 US 201462097685 P
(71) Applicant: AGCO CORPORATION, Duluth, Georgia 30096-2568 (US)
(72) Inventor: van Bergeijk, Jacob, Hesston, KS 67062-2094 (US)
(74) Representative: AGCO Intellectual Property Department

(57) **Abstract**

In one embodiment, a method comprising without user intervention: receiving encrypted first information from a device over a wired medium; decrypting the encrypted first information; and communicating second information over a wireless medium based on the first information.

## Description

### TECHNICAL FIELD

The present disclosure is generally related to authentication in network systems.

### BACKGROUND

The amount of data that needs to be exchanged between electronic control units (ECUs) connected by a controller area network (CAN) bus or busses on agricultural equipment is rapidly exceeding the bandwidth that is available on these CAN busses. One method to expand the data communication bandwidth is to add wireless data communication to these ECUs and use the wireless communication bandwidth to synchronize operational data sets, firmware and calibration data, log data, and to stream multi-media data.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1A is a schematic diagram that illustrates an example environment in which an embodiment of an automatic wireless connection system may be implemented.
FIG. 1B is a schematic diagram that illustrates an example connection sequence implemented by the automatic wireless connection system of FIG. 1A.
FIG. 2A is a schematic diagram that illustrates another example environment in which an embodiment of an automatic wireless connection system may be implemented.
FIG. 2B is a schematic diagram that illustrates an example connection sequence implemented by the automatic wireless connection system of FIG. 2A.
FIG. 3 is a block diagram that illustrates an embodiment of an automatic wireless connection system.
FIG. 4 is a block diagram that illustrates an embodiment of an electronic device that may be used in the automatic wireless connection system of FIG. 3.
FIG. 5 is a flow diagram that illustrates an embodiment of an automatic wireless connection method.

### DESCRIPTION OF EXAMPLE EMBODIMENTS

### Overview

In one embodiment, a method comprising: without user intervention: receiving encrypted first information from a device over a wired medium; decrypting the encrypted first information; and communicating second information over a wireless medium based on the first information.

### Detailed Description

Certain embodiments of an automatic wireless connection system and method are disclosed that securely share wireless network settings (e.g., service set identifier or SSID, the type of encryption and authentication that needs to be used, access point mode, client mode, ad-hoc mode, etc.) and connection credentials (e.g., SSID/password combination, enterprise type authentication, etc.) via a wired medium without user intervention. In one embodiment, an automatic wireless connection system comprises a wired medium and plural devices (e.g., electronic control units or ECUs) coupled to the wired medium, wherein the devices comprise wireless communication functionality. The devices each comprise a processor configured to establish wireless communications with one or more other devices coupled to the wired medium based on an exchange of information, without user intervention, with the one or more other devices over the wired medium, and subsequently, carry on wireless communications with these and other devices with wireless functionality.

Digressing briefly, configuration and first time establishment of a network comprising wireless, augmented ECUs, is currently a manual process. This process typically requires each ECU to have a mechanism for a user or equipment operator to specify the wireless network settings and connection credentials to secure each wireless connection. Some ECUs on a mobile machine (e.g., combine harvester, tractor, etc.) may not have access or a mechanism to present an operator interface, limiting the possibility to properly set up and secure wireless communication methods. In contrast, certain embodiments of an automatic wireless connection system eliminates the need for manual configuration of wireless network settings and connection credentials on devices that are already connected through a wired medium, such as a controller area network (CAN) bus or busses. In other words, certain embodiments of automatic wireless connection systems enable the configuration of wireless communications between devices on a mobile machine without requiring a manufacturer or machine operator to configure the wireless network settings and connection credentials of each network participant individually. The automatic wireless connection system may securely synchronize wireless network settings and connection credentials across an entire mobile machine (including coupled implements), eliminating the need for providing a user interface for each device for adjusting these settings. The automatic wireless connection system may also prevent incorrect wireless network settings and connection credentials to, for instance, external wireless nodes that happen to be within range of the devices of a given mobile machine.

Having summarized certain features of automatic wireless connection systems of the present disclosure, reference will now be made in detail to the description of the disclosure as illustrated in the drawings. While the disclosure will be described in connection with these drawings, there is no intent to limit it to the embodiment or embodiments disclosed herein. For instance, in the description that follows, one focus is on an agricultural machine embodied as a tractor, though it should be appreciated that some embodiments of automatic wireless connection systems may be used in, or in conjunction with, other agricultural machines (e.g., planters, sprayers, foragers, windrowers, including support machines, such as truck and trailer combinations), towed or self-propelled, and/or mobile machines or vehicles from other industries that can benefit from automated wireless connectivity, and hence are contemplated to be within the scope of the disclosure. Further, though emphasis is placed on nodes or devices configured as electronic control units (ECUs) on a controller area network (CAN) bus, it should be appreciated that other devices (e.g., sensors, machine controls, etc.) for wired mediums of the same or different (e.g., proprietary) protocols or standards/specifications may be used, and hence are contemplated to be within the scope of the disclosure. Further, although the description identifies or describes specifics of one or more embodiments, such specifics are not necessarily part of every embodiment, nor are all various stated advantages necessarily associated with a single embodiment or all embodiments. On the contrary, the intent is to cover all alternatives, modifications and equivalents included within the spirit and scope of the disclosure as defined by the appended claims. Further, it should be appreciated in the context of the present disclosure that the claims are not necessarily limited to the particular embodiments set forth in the description.

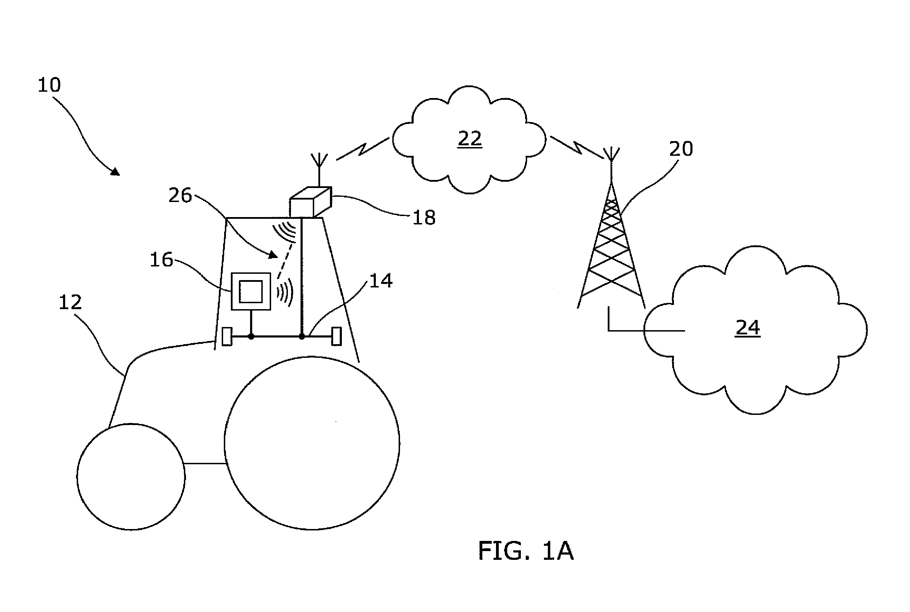

Referring now to FIG. 1A, shown is an example environment 10 in which an embodiment of an automatic wireless connection system may be implemented. In one embodiment, the environment 10 may include a mobile machine 12, a wired medium 14 located within the mobile machine, and a plurality of electronic devices 16 and 18 connected to the wired medium 14 and also located within the mobile machine 12. In one embodiment, the automatic wireless connection system may comprise the devices 16 and 18 and the wired medium 14. In some embodiments, the automatic wireless connection system may comprise additional components, such as the mobile machine 12. The environment 10 further includes a cellular tower 20 that couples a cellular network 22 to one or more other networks, such as a wide area network 24 (e.g., Internet). The devices 16 and 18 are configured for wired and wireless communications, the latter via a wireless medium or wireless network 26. Note that not all devices connected to the wired medium 14 are necessarily configured for wireless communications. It should be appreciated by one having ordinary skill in the art, in the context of the present disclosure, that the environment 10 is merely illustrative, and that certain embodiments of an automatic wireless connection system may be implemented in other environments of the same or different networks and/or different mobile machines.

The mobile machine 12 is depicted as a tractor with wheels, though the mobile machine 12 may be embodied as any vehicle or mobile machine (vehicle and mobile machine used interchangeably herein) using wheels and/or tracks for the agricultural industry, or vehicles used in other venues or applications, such as passenger vehicles, commercial vehicles, construction equipment, mining equipment, etc. The mobile machine 12 may also include a coupled implement that includes a wired medium with one or more devices, the implement wired medium coupled to the wired medium 14.

The wired medium 14 may comprise a plurality of wires logically defined as a data bus or data busses. In one embodiment, the wired medium 14 comprises a controller area network (CAN) bus defined according to ISO11898, as further extended under ISO 11783, and which uses in one embodiment, a physical arrangement of twisted pair wiring (e.g., typically bundled as one or more wiring harnesses). In some embodiments, other logical and/or physical configurations may be used, such as to enable RS232-based communications. In one embodiment, address claiming and/or messaging in general for each node or device connected to the wired medium 14 may be implemented according to SAE J1939, though other protocols or specifications or standards may be used in some embodiments.

The electronic devices 16 and 18 are depicted respectively as a board computer electronic control unit (ECU) and a gateway ECU, respectively. For instance, the board computer ECU 16 may provide a user interface for use as an operator's console. The gateway ECU 18 may have cellular modem functionality and browser software functionality to enable network connectivity (e.g., communications with the cellular tower 20 and access to the Internet 24). It should be appreciated that these functions for the respective devices 16 and 18 are merely illustrative, and that additional and/or different devices with different roles or functions may be used in some embodiments. For instance, other devices capable of communicating information over the wired medium 14 may be used, such as sensors, various machine controls (e.g., actuators), etc. Note that the terms, electronic device 16 and electronic device 18, will be used hereinafter interchangeably with board computer ECU and gateway ECU, respectively, with the understanding that the roles may be reversed and/or ECUs or devices with different functions may be used.

The board computer ECU 16 and the gateway ECU 18 are connected (e.g., as nodes) to the wired medium 14, and communicate with each other and other devices based on messages formatted according to the applied protocol (e.g., J1939). In addition, the board computer ECU 16 and the gateway ECU 18 are equipped with wireless (e.g., authenticated Wireless fidelity or Wi-Fi, such as based on IEEE 802.11) functionality to enable wireless (e.g., radio frequency) communications via a wireless medium (e.g., wireless network 26). In one example operation, the board computer ECU 16 and the gateway ECU 18 transfer (and synchronize) one or more types of data, such as field operational data, firmware/calibration data, log data, and/or multi-media data (e.g., from a sensor, such as a camera).

In one embodiment of an automatic wireless connection system, a wireless connection is automatically (e.g., without user intervention) established between the board computer ECU 16 and the gateway ECU 18. For instance, in the environment 10 depicted in FIG. 1A, the gateway ECU 18 is configured as a wireless network access point and further communicates information over the wired medium 14. Note that in some embodiments, an ad hoc mode may be implemented between the two electronic devices 16 and 18. The provision of the information may be according to a broadcast message, the information comprising wireless network settings and connection credentials For instance, the gateway ECU 18 announces, such as via a broadcast message, its network identifier (e.g., service set identifier or SSID) and authentication parameters (e.g., passcode or password) in an encrypted message on the wired medium 14. The board computer ECU 16 receives and decrypts the message and uses the network settings and authentication parameters to join the wireless network 26 and synchronize field operational data through the gateway ECU 18. The operational data (and/or other data) may be communicated from the gateway ECU 18 over the cellular network 22 to one or more devices coupled to the Internet 24.

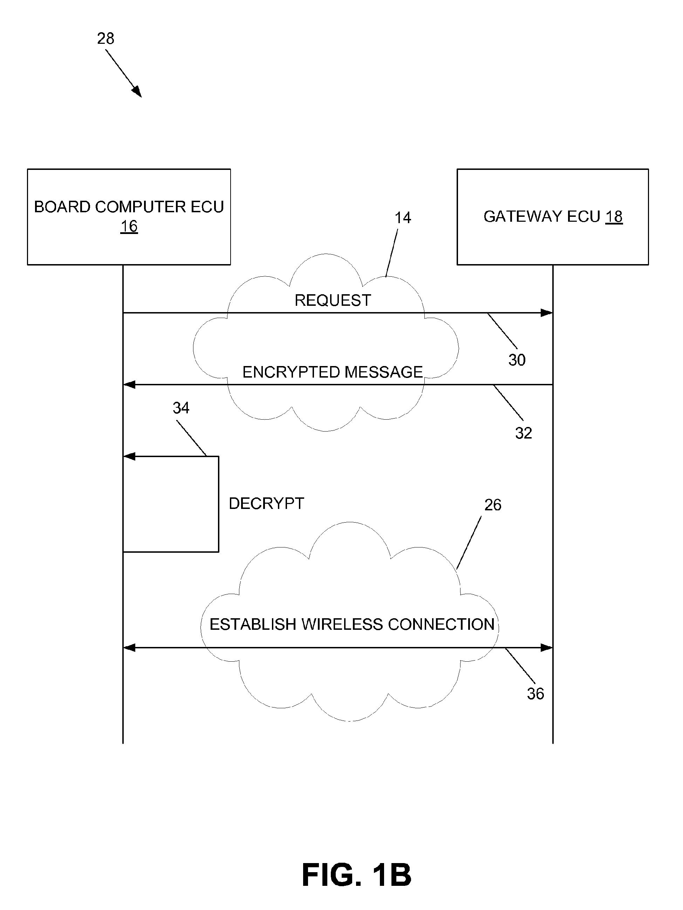

With continued reference to FIG. 1A, attention is directed to FIG. 1B, which illustrates an example connection sequence 28 implemented by the automatic wireless connection system of FIG. 1A. The connection sequence 28 corresponds to an establishment of a wireless (e.g., authenticated Wi-Fi) connection between two electronic devices (e.g., the board computer ECU 16 and the gateway ECU 18). In general, each electronic device 16 and 18 announces its wireless connection capabilities on the wired medium 14 both upon power up and when an event (e.g., connection of the board computer ECU 16 or the gateway ECU 18 to the wired medium 14) occurs. Using as an example the board computer ECU 16 seeking to establish a connection with the gateway ECU 18 (wherein a similar sequence may be applied if the gateway ECU is seeking to establish a connection with the board computer ECU 16), the board computer ECU 16 communicates a request for wireless network settings and connection credentials from the gateway ECU 18 (30). The request is effectively a request to join the wireless network 26, delivered over the wired medium 14 (as indicated by the "cloud" representation 14 in FIG. 1 B). The gateway ECU 18 responds with an encrypted message comprising wireless mode and authentication details (32), also delivered via the wired medium 14. The board computer ECU 16 decrypts the encrypted message to obtain the wireless mode and authentication information (34). The board computer ECU 16 uses the wireless network settings and connection credentials to establish the connection with the wireless network 26 (36), wherein operational data, multi-media data, etc. may be communicated at a time corresponding to the established connection with the gateway ECU 18. Note that the wireless network 26 is depicted in this example with a "cloud" representation.

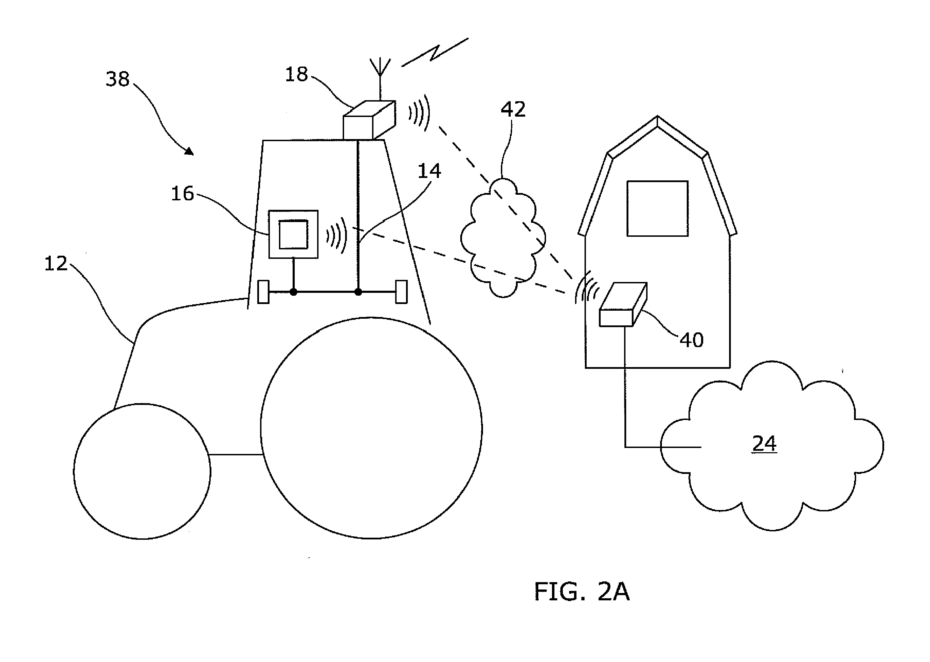

Referring now to FIG. 2A, shown is another example environment 38 in which an embodiment of an automatic wireless connection system may be implemented. In one embodiment, the environment 38 may include the components described for the environment 10 of FIG. 1, including the mobile machine 12, the wired medium 14, and the plurality of electronic devices 16 and 18 connected to the wired medium 14, as well as the Internet 24. As these components were described in association with FIG. 1A, further description herein omitted for brevity. Also shown for environment 38 is an external access point (AP) 40. The external AP 40 is not connected to the wired medium 14, and may comprise Wi-Fi access point functionality for a home or business (or building structure, such as a shed). The external AP 40 is coupled to one or more networks, such as to the Internet 24 via a wireless (e.g., cellular) or physical (Ethernet, etc.) connection. In one embodiment, the automatic wireless connection system may comprise the devices 16 and 18 and the wired medium 14. In some embodiments, the automatic wireless connection system may comprise additional components, such as the mobile machine 12 and/or the external AP 40. In the example environment 38 depicted in FIG. 2A, the gateway ECU 18 connects via a wireless (Wi-Fi) network 42 to the external AP 40. In other words, the gateway ECU 18 uses its Wi-Fi capabilities to connect to the in-range, Wi-Fi AP 40 that is external to the mobile machine 12. The external AP 40 may have previously been configured to connect to a known network, such as the wireless network 42, by an operator or other individual. Examples of such networks 42 include business location-based Wi-Fi access points, Wi-Fi hotspots, etc. The network details (e.g., that the network 42 is external to the network of the mobile machine) and the wireless network settings and connection credentials are broadcast by the gateway ECU 18 on the wired medium 14. For instance, events that may prompt the broadcast include when the gateway ECU 18 successfully connects, or when the board ECU 16 joins the wired medium 14 and the gateway ECU 18 already has a Wi-Fi connection established. The board computer ECU 16 uses the wireless network settings and connection credentials and access credentials to connect automatically to the external AP via wireless network 42. Accordingly, the devices 16 and 18 wirelessly communicate data (e.g., operational data, multi-media data, etc.) to the external AP 40.

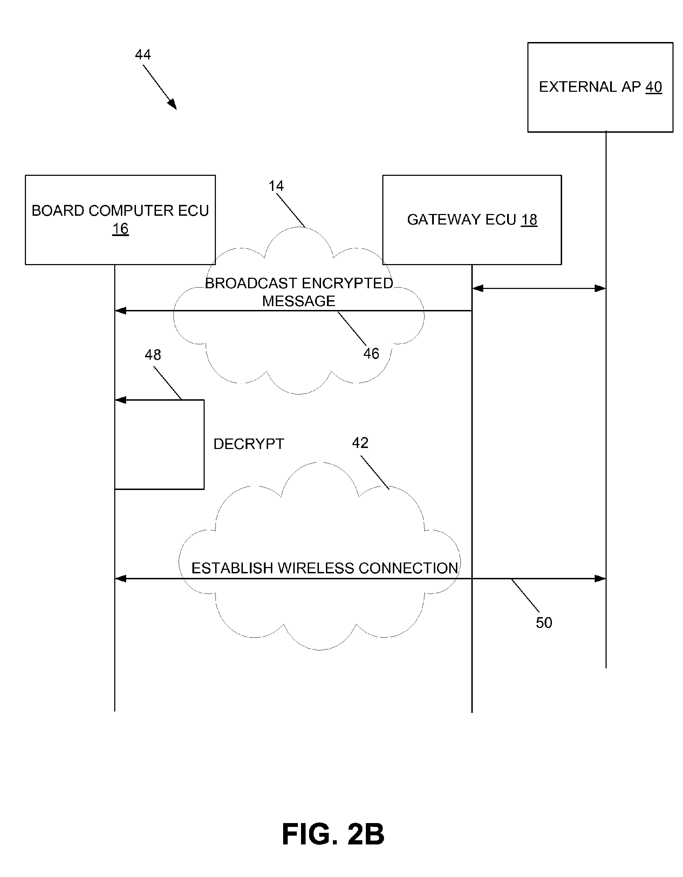

With continued reference to FIG. 2A, attention is directed to FIG. 2B, which illustrates an example connection sequence 44 implemented by the automatic wireless connection system of FIG. 2A. The connection sequence 44 corresponds to an establishment of a respective wireless (e.g., Wi-Fi) connection between the devices (e.g., the board computer ECU 16 and the gateway ECU 18) and the external AP 40 over wireless network 42. Similar to the description associated with FIGS. 1A-B, the establishment of a wireless connection may be implemented by the board computer ECU 16, or as depicted in FIG. 2B, by the gateway ECU 18 (and/or other devices in some embodiments). The gateway ECU 18 uses its Wi-Fi wireless connection to connect to an in-range external AP, such as the external AP 40. The gateway ECU 18, serving a role as an access point for the mobile machine 12, receives the wireless network settings and access credentials of the wireless network 42 from the external AP 40, enabling a wireless connection to be established by the gateway ECU 18 and the external AP 40. The gateway ECU 18 may receive this information a priori, such as via an initiation or start-up procedure involving the farmer, dealer, or operator. Upon power-up and connection to the wired medium 14 of the devices 16 and 18, the wireless network settings and access credentials of the wireless network 42 are broadcast by the gateway ECU 18 in an encrypted message(s) delivered over the wired medium 14 (46). The board computer ECU 16 decrypts the encrypted information (48). The board computer ECU 16 joins the wireless network 42 (50).

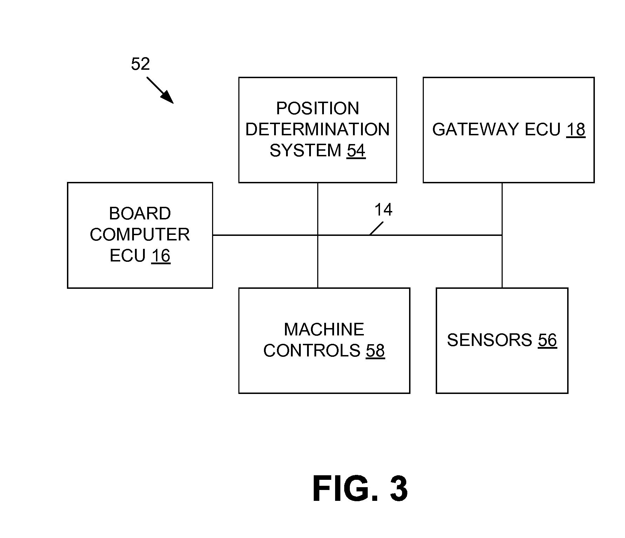

Reference is now made to FIG. 3, which illustrates an embodiment of an example automatic wireless connection system 52. It should be appreciated within the context of the present disclosure that some embodiments may include additional components or fewer or different components, and that the example depicted in FIG. 3 is merely illustrative of one embodiment among others. In the depicted embodiment, the automatic wireless connection system 52 comprises a plurality of electronic devices configured to communicate over the wired medium 14, including the board computer ECU 16, the gateway ECU 18, among other devices, such as a position determination device 54, one or more sensors 56, and one or more machine controls 58.

As noted above, the board computer ECU 16 may comprise a task controller and/or operator console computer, including user interface functionality, and the gateway ECU 18 may comprise cellular connectivity, such as via a cellular modem. Both devices 16 and 18 comprise wireless (Wi-Fi) capabilities, such as via a radio modem. The position determination device 54 may be embodied as a global navigation satellite system (GNSS) receiver, which may include the ability to access one or more constellations to enable machine positioning. The sensors 56 may comprise contact and/or non-contact type sensors, including strain gauges, accelerometers, gyroscopes, radar, laser, ultrasound, among other types of sensors. The machine controls 58 collectively comprise the various actuators and/or subsystems residing on the mobile machine 12 (FIG. 1 A), including those used to control machine navigation (e.g., speed, direction (such as a steering system), etc.), implement (e.g., header or trailer) position, and/or to control internal processes, among others.

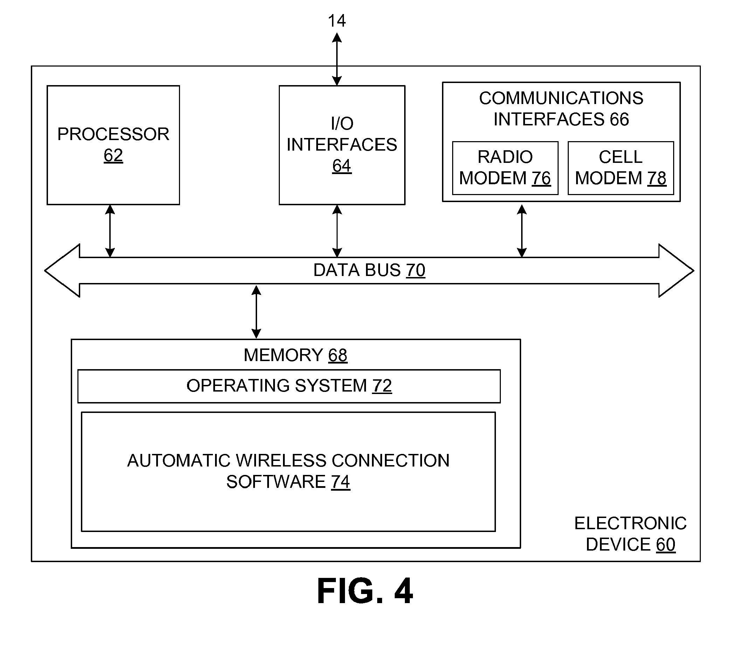

With continued reference to FIG. 3, FIG. 4 further illustrates an example embodiment of an electronic device 60. The electronic device 60 may comprise the board computer ECU 16, the gateway ECU 18, and/or one of the devices 54-58 depicted in FIG. 3. One having ordinary skill in the art should appreciate in the context of the present disclosure that the example electronic device 60 is merely illustrative, and that some embodiments may comprise fewer or additional components, and/or some of the functionality associated with the various components depicted in FIG. 4 may be combined, or further distributed among additional modules, in some embodiments. The electronic device 60 is depicted in this example as a computer system, but may be embodied as a programmable logic controller (PLC), FPGA, ASIC, among other devices. It should be appreciated that certain well-known components of computer systems are omitted here to avoid obfuscating relevant features of the electronic device 60. In one embodiment, the electronic device 60 comprises one or more processors, such as processor 62, input/output (I/O) interface(s) 64, wireless communication interfaces 66, and memory 68, all coupled to one or more data busses, such as data bus 70. The memory 68 may include any one or a combination of volatile memory elements (e.g., random-access memory RAM, such as DRAM, and SRAM, etc.) and nonvolatile memory elements (e.g., ROM, hard drive, tape, CDROM, etc.). The memory 68 may store a native operating system, one or more native applications, emulation systems, or emulated applications for any of a variety of operating systems and/or emulated hardware platforms, emulated operating systems, etc. In some embodiments, the memory 68 may store one or more wireless network settings and connection credentials, such as for the electronic device 60 and optionally other devices (e.g., the external AP 40, FIG. 2A). In the embodiment depicted in FIG. 4, the memory 68 comprises an operating system 72, and automatic wireless connection software 74. It should be appreciated that in some embodiments, additional or fewer software modules (e.g., combined functionality) may be employed in the memory 68 or additional memory, such as software to receive and communicate messages over the wired medium 14 (FIG. 3), browser software, among other functionality known to those having ordinary skill in the art. In some embodiments, a separate storage device may be coupled to the data bus 70, such as a persistent memory (e.g., optical, magnetic, and/or semiconductor memory and associated drives).

The automatic wireless connection software 74 enables automatic (e.g., without the manual entry by an operator of wireless network settings and connection credentials) establishment of a wireless connection based on receipt of the wireless network settings and connection credentials over the wired medium 14 (FIG. 4) received in response to an event (e.g., power up and connection to the wired medium 14, etc.) or other circumstances. The wireless network settings and connection credentials such as passcodes may be stored in memory 68 or in a secure processor. The passcodes may include dynamically changing passcodes or static passcodes.

Execution of the automatic wireless connection software 74, among other software, may be implemented by the processor(s) 62 under the management and/or control of the operating system 72. In some embodiments, the operating system 72 may be omitted and a more rudimentary manner of control implemented. The processor 62 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the electronic device 60.

The I/O interfaces 64 provide one or more interfaces to the wired medium 14. In other words, the I/O interfaces 64 may comprise any number of interfaces for the input and output of signals (e.g., analog or digital data) for conveyance of information (e.g., data) over the wired medium 14. The input may comprise input by an operator (local or remote) through a user interface (e.g., a keyboard, joystick, steering wheel, or mouse or other input device (or audible input in some embodiments)), and input from signals carrying information from one or more of the components of the automatic wireless connection system 52.

The wireless communication interfaces 66 comprise functionality to receive and send information over one or more wireless networks, and include a radio modem 76 and a cellular (cell) modem 78. The radio and cellular modems 76 and 78 comprise well-known transceiver functionality, including PHY and MAC components. In one embodiment, the radio modem 76 and/or cellular modem 78 may be embodied on a single chip or plural chips, such as on a network or wireless card. In some embodiments, the cellular modem 78 may be omitted in some embodiments, such as for devices that do not connect to a cellular network (e.g., rely on communications with the gateway ECU 18 to connect to the Internet). The radio modem 76 enables communication of information over a Wi-Fi network.

When certain embodiments of the electronic device 60 are implemented at least in part as software (including firmware), as depicted in FIG. 4, it should be noted that the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiments of the electronic device 60 are implemented at least in part as hardware, such functionality may be implemented with any or a combination of the following technologies, which are all well-known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

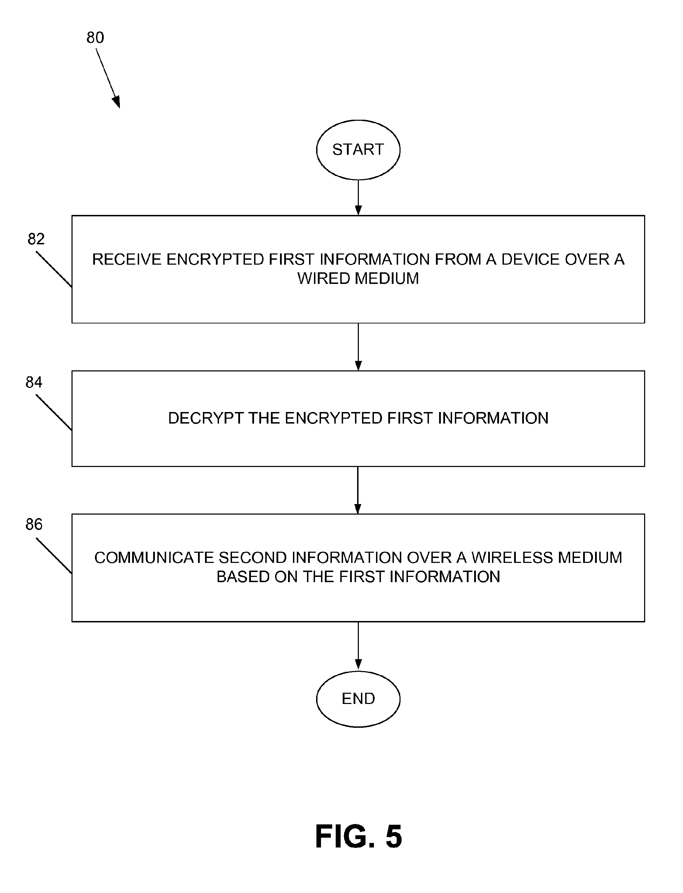

In view of the above description, it should be appreciated that one embodiment of an automatic wireless connection method 80, depicted in FIG. 5, comprises: without user intervention: receiving encrypted first information from a device over a wired medium (82); decrypting the encrypted first information (84); and communicating second information over a wireless medium based on the first information (86).

Any process descriptions or blocks in flow diagrams should be understood as representing steps and/or modules, segments, or portions of code which include one or more executable instructions for implementing specific logical functions or steps in the process, and alternate implementations are included within the scope of the embodiments in which functions may be executed out of order from that shown or discussed, including substantially concurrently, depending on the functionality involved, as would be understood by those reasonably skilled in the art of the present disclosure.

It should be emphasized that the above-described embodiments of the present disclosure, particularly, any "preferred" embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and protected by the following claims.

## Claims

1. A method, comprising:
without user intervention:
receiving encrypted first information from a device over a wired medium;
decrypting the encrypted first information; and
communicating second information over a wireless medium based on the first information.

2. The method of claim 1, further comprising communicating wireless connection capabilities over the wired medium.

3. The method of claim 2, wherein the communicating of the wireless connection capabilities is responsive to powering up and being connected to the wired medium.

4. The method of claim 1, wherein the first information comprises network settings and connection credentials.

5. The method of claim 1, wherein communicating the second information over a wireless medium comprises communicating the second information to the device.

6. The method of claim 1, wherein communicating the second information over a wireless medium comprises communicating the second information to a remotely located device that is not connected to the wired medium.

7. The method of claim 1, wherein receiving the encrypted first information comprises receiving broadcasted encrypted first information that is received by at least one other device.

8. The method of claim 1, wherein the receiving, decrypting, and communicating occur on a mobile machine or an implement coupled to the mobile machine.

9. The method of claim 1, wherein the receiving, decrypting, and communicating occur in an ad hoc mode.

10. The method of claim 1, wherein the receiving, decrypting, and communicating occur in an access point (AP) mode.

11. The method of claim 1, wherein the wired medium comprises multiple physical wiring logically configured as a controller area network (CAN) bus or CAN busses.

12. A method, comprising:
without user intervention:
sending encrypted first information over a wired medium; and
communicating wirelessly with a device connected to the wired medium based on the sending of the encrypted first information.

13. The method of claim 12, wherein the device is connected to the wired medium, the wired medium comprising multiple physical wiring logically configured as a controller area network (CAN) bus or CAN busses.

14. The method of claim 13, further comprising additional devices connected to the wired medium, the additional devices receiving the encrypted first information, wherein the communicating comprises communicating wirelessly with the additional devices based on the sending of the encrypted first information.

15. The method of claim 14, wherein the sending and the communicating occur on a mobile machine, an implement coupled to the mobile machine, or a combination of the mobile machine and the implement.

16. The method of claim 12, further comprising communicating wireless connection capabilities over the wired medium, wherein the communicating of the wireless connection capabilities is responsive to powering up and being connected to the wired medium.

17. The method of claim 12, wherein the first information comprises network settings and connection credentials.

18. The method of claim 12, further comprising wirelessly communicating with a remotely located device, wherein sending the encrypted first information comprises sending network settings and connection credentials of the remotely located device.

19. A system, comprising:
a mobile machine, comprising:
a wired medium; and
a first device coupled to the wired medium, the first device comprising:
a processor configured to automatically establish wireless communications with one or more other devices coupled to the wired medium based on an exchange of information, without user intervention, with the one or more other devices over the wired medium.

20. The system of claim 19, further comprising a second device located remotely from the mobile machine and un-connected to the wired medium, wherein the one or more other devices are configured to establish wireless communications with the second device based on the exchange of information.
